# FASCICULE DE BREVET EUROPEEN

(11) **EP 2 587 081 B1**
(45) Date de publication et mention de la délivrance du brevet: **16.12.2015**
(21) Numéro de dépôt: 12189869.6
(22) Date de dépôt: 25.10.2012
(51) Int. Cl.: F16C 33/34, F16C 33/36, F16C 35/06, B25B 27/06, B66C 1/66

(54) **Extraction d'un roulement à rouleaux**
Extraktion eines Rollenlagers
Extraction of a roller bearing

(30) Priorité: 31.10.2011 FR 1159873
(43) Date de publication de la demande: 01.05.2013
(73) Titulaire: NTN-SNR Roulements, 74000 Annecy (FR)
(72) Inventeur: Oddoux, Christophe, 74940 Annecy le Vieux (FR); Deprez, Philippe, 77124 VILLENOY (FR)
(74) Mandataire: Derambure, Christian

(56) Documents cités:
- EP-A1- 0 565 580
- EP-A2- 0 891 839
- WO-A1-2010/116058
- GB-A- 1 017 852
- US-A- 3 301 615

## Description

L'invention est relative à l'extraction d'un roulement à rouleaux.

Elle a plus spécialement pour objet, un roulement à rouleaux extractible apte à être extrait de l'arbre central et/ou du logement périphérique auquel il est solidarisable de façon fixe, l'assemblage d'un tel roulement à rouleaux extractible et de son arbre central et/ou de son logement périphérique, un système comprenant un tel assemblage et un dispositif d'extraction d'un tel roulement extractible, un ensemble monté, prêt à l'extraction, d'un tel dispositif d'extraction d'un roulement à rouleaux extractible, et un procédé d'extraction d'un roulement à rouleaux de l'arbre central et/ou du logement périphérique auquel le roulement est solidarisé de façon fixe.

L'on sait qu'extraire un roulement d'un assemblage qui comporte ce roulement, son arbre central et son logement périphérique, dans lequel la bague intérieure du roulement est montée rigidement sur l'arbre central et/ou la bague extérieure est montée rigidement dans le logement périphérique, une face transversale du roulement au moins étant accessible depuis l'extérieur de l'assemblage, est une opération difficile. La difficulté est d'autant plus grande lorsque dans l'assemblage, l'autre face transversale du roulement est inaccessible depuis le côté de la face transversale accessible, lorsque les bagues interne et externe du roulement n'offrent aucune prise aux organes de prise d'un dispositif d'extraction du roulement ou n'offrent que de faibles prises, lorsque l'assemblage comprenant le roulement est trop serré, lorsque le roulement est d'une taille importante, par exemple ayant une bague intérieure d'un diamètre supérieur à 150 mm, lorsque l'environnement du roulement est fragile.

Pour extraire un tel roulement, il n'y a alors d'autre choix que de le détruire, avec les risques inhérents. Une telle opération est longue, fastidieuse, risquée et elle repose sur le savoir-faire et le tour de main de la personne qui procède à l'extraction du roulement.

On connaît également des extracteurs de roulements. Le document EP-A-0565580 décrit un tel extracteur qui comporte des organes de prise en forme de crochets introduits chacun entre deux corps roulants du roulement de sorte à venir le prendre du côté arrière. Mais un tel extracteur ne peut être utilisé que s'il existe des passages entre les corps roulants successifs tels qu'il soit possible de faire passer les organes de prise. Le document GB-A-1017852 décrit un autre extracteur dans lequel la prise est latérale. Mais, cet extracteur nécessite une prise suffisante aux organes de prise de l'extracteur.

Il existe donc le besoin de disposer de pouvoir extraire un roulement d'un assemblage qui comporte ce roulement, son arbre central et son logement périphérique, et ce de façon aisée alors même que l'autre face transversale du roulement est inaccessible depuis le côté de la face transversale accessible, que les bagues du roulement n'offre aucune prise, que l'assemblage comprenant le roulement est serré, que le roulement est d'une taille importante, par exemple ayant une bague intérieure d'un diamètre supérieur à 150 mm, et que l'environnement du roulement est fragile.

Le document US 3 301 615 vise un roulement agencé avec des rouleaux percés axialement de trous, en vue de la lubrification, ce qui ne vise pas un roulement à rouleaux extractibles, les rouleaux visés dans ce document n'étant d'ailleurs pas des rouleaux « d'ancrage », ce qui est d'autant plus vrai que les faces transversales de ces rouleaux sont très largement inaccessibles et que les ouvertures des trous sont toujours occultés par les couronnes de la cage du roulement, et il est ainsi impossible que les trous reçoivent quoi que ce soit par coulissement axial.

En revanche, le document EP 0 891 839 vise un dispositif d'extraction d'un roulement. Dans cette réalisation, le roulement à extraire est quelconque, en ce sens qu'il n'est pas spécialement conçu pour être extractible. Ainsi, le roulement à extraire selon ce document est tel que les rouleaux ne sont pas du tout pourvus de trous d'ancrage, l'élément allongé décrit dans ce document passant entre les rouleaux et non pas à travers les rouleaux.

A cet effet, selon un premier aspect, l'invention a pour objet un roulement à rouleaux extractible, apte à être extrait de l'arbre central et/ou du logement périphérique auquel il est solidarisable de façon fixe, limité des deux côtés par deux faces transversale dont l'une au moins est une face transversale accessible, comprenant une bague intérieure, une bague extérieure et, dans un espace entre les deux bagues, un agencement à rouleaux incluant une cage et des rouleaux limités par deux faces transversales dont l'une au moins est une face transversale accessible située du côté de la face transversale accessible, ledit roulement étant pourvu d'au moins deux trous d'ancrage ménagés dans au moins deux rouleaux à trou d'ancrage faisant partie des N rouleaux, espacés l'un de l'autre, plus particulièrement espacés sensiblement régulièrement, les au moins deux trous d'ancrage débouchant par une ouverture d'accès terminale dans la face transversale accessible, s'étendant au moins dans la direction de l'axe du roulement et ayant au moins un moyen interne d'ancrage au moins en traction en direction d'une même face transversale accessible du roulement dans laquelle débouchent les au moins deux trous d'ancrage, aptes et destinés à pouvoir recevoir par coulissement relatif, et coopérer de sorte à être rendus solidaires au moins en traction en direction de la face transversale accessible avec deux organes de prise d'un dispositif d'extraction du roulement.

Selon une réalisation, le roulement à rouleaux extractible est pourvu de de n trous d'ancrage ménagés dans n rouleaux à trou d'ancrage espacés les uns des autres d'un espacement angulaire sensiblement égal, n étant au moins égal à deux et étant choisi en vue d'optimiser la répartition des efforts d'extraction du roulement, n étant en particulier égal à trois, les rouleaux à trou d'ancrage étant alors espacés les uns des autres d'un espacement angulaire sensiblement égal à 120°.

Selon les réalisations, l'agencement à rouleaux comporte une ou plusieurs rangées de rouleaux et l'agencement à rouleaux est à rouleaux cylindriques ou à rouleaux coniques ou à rouleaux sphériques.

Selon une réalisation, un trou d'ancrage s'étend sensiblement parallèlement à l'axe du rouleau à trou d'ancrage dans lequel il est ménagé, plus particulièrement un trou d'ancrage est sensiblement coaxial avec le rouleau à trou d'ancrage dans lequel il est ménagé.

Selon une réalisation, un trou d'ancrage s'étend dans la direction générale de l'axe du roulement, en particulier parallèle, sensiblement parallèlement ou peu incliné sur cet axe.

Selon une réalisation, un trou d'ancrage est un trou taraudé, un moyen interne d'ancrage du trou d'ancrage étant un taraudage.

Selon une réalisation, un trou d'ancrage a un diamètre inférieur à de l'ordre du tiers du diamètre extérieur du rouleau à trou d'ancrage dans lequel le trou d'ancrage est ménagé.

Selon une première réalisation, un trou d'ancrage est un trou borgne. En particulier, le trou borgne s'étend sur une longueur de l'ordre de, ou inférieure à, la moitié de la longueur du rouleau à trou d'ancrage dans lequel le trou d'ancrage est ménagé comptée dans la direction du trou d'ancrage.

Selon une seconde réalisation, un trou d'ancrage est un trou traversant le rouleau à trou d'ancrage dans lequel il est ménagé. Dans cette réalisation, en particulier, la cage de l'agencement à rouleaux est pourvue d'un évidement situé en regard d'un trou d'ancrage traversant.

Selon une réalisation, les trous d'ancrage débouchent sur une seule face transversale accessible du roulement.

Selon une réalisation, des trous d'ancrage débouchent sur chacune des deux faces transversales du roulement.

Selon une réalisation, les N rouleaux sont tous des rouleaux à trous d'ancrage.

Selon une application, le diamètre d'alésage de la bague intérieure est au moins égal à 150 mm, en particulier le roulement à rouleaux extractible est un gros roulement dont le diamètre d'alésage de la bague intérieure est égal ou supérieur à 180 mm.

Selon une réalisation, le roulement à rouleaux extractible est également caractérisé par des corps de bouchage aptes à être reçus dans et coopérer avec les trous d'ancrage, de sorte à être rendus solidaires, de façon amovible, des rouleaux à trou d'ancrage. Ainsi, l'invention vise également un roulement à rouleaux extractible dans lequel les corps de bouchage sont reçus dans et coopèrent avec les trous d'ancrage.

Selon une première présentation, l'invention vise un roulement à rouleaux extractible dans lequel les trous d'ancrage sont libres. Selon une seconde présentation, l'invention vise un roulement à rouleaux extractible apte à recevoir des organes de prise d'un dispositif d'extraction du roulement reçus dans et coopérant avec les trous d'ancrage, de sorte, les moyens d'ancrage coopérant, à être rendus solidaires au moins au moins en traction en direction de la face transversale accessible du roulement.

Selon un deuxième aspect, l'invention a pour objet un assemblage d'un roulement à rouleaux extractible tel qu'il vient d'être décrit et de son arbre central et/ou de son logement périphérique, la bague intérieure étant montée rigidement sur l'arbre central et la bague extérieure étant montée rigidement dans le logement périphérique, la face transversale du roulement dans laquelle débouche des trous d'ancrage étant accessible depuis l'extérieur de l'assemblage.

Selon un troisième aspect, l'invention a pour objet un système comprenant un assemblage tel qu'il vient d'être décrit et un dispositif d'extraction d'un roulement à rouleaux extractible de l' assemblage adapté au roulement à rouleaux extractible à extraire, ayant un axe et comprenant :
▪ au moins deux organes de prise ayant au moins un moyen externe d'ancrage, s'étendant au moins dans la direction de l'axe, aptes - lorsque souhaité en vue de l'extraction du roulement - à être disposés de façon espacés l'un de l'autre, plus particulièrement espacés sensiblement régulièrement autour de l'axe, et à être reçus dans les au moins deux trous d'ancrage du roulement, les moyens externes d'ancrage coopérant avec les moyens internes d'ancrage des trous d'ancrage des rouleaux à trous d'ancrage pour l'association rigide organe de prise / trou d'ancrage au moins en traction en direction de la face transversale accessible du roulement où débouchent des trous d'ancrage, le dispositif d'extraction étant ainsi rendu solidaire du roulement,
▪ des moyens aptes à exercer sur les au moins deux organes de prise une traction d'extraction relative par rapport au roulement dans une direction selon l'axe du roulement - ou comportant une composante selon l'axe du roulement -, et dans le sens allant vers l'extérieur du roulement à partir de ladite face transversale accessible du roulement où débouchent des trous d'ancrage.

Selon une réalisation, le dispositif d'extraction est pourvu de trois organes de prise espacés les uns des autres d'un espacement angulaire sensiblement égal à 120°.

Selon une réalisation, des moyens aptes à exercer sur les au moins deux organes de prise une traction d'extraction relative par rapport au roulement dans une direction selon l'axe du roulement - ou comportant une composante selon l'axe du roulement -, et dans le sens allant vers l'extérieur du roulement à partir de ladite face transversale accessible du roulement où débouchent des trous d'ancrage comportent :
▪ un corps et, solidaires, du corps,
▪ des moyens de liaison entre le corps et les au moins deux organes de prise, aptes à exercer une traction d'extraction sur les au moins deux organes de prise, et
▪ au moins une face d'appui transversale apte à coopérer en compression sur une face transversale accessible de l'arbre central et/ou du logement périphérique de l'assemblage comprenant le roulement à rouleaux extractible, l'arbre central et/ou le logement périphérique,
▪ des moyens de coulissement axial relatif des au moins deux organes de prise et de la au moins une face d'appui transversale, dans le sens de l'extraction du roulement.

Selon une réalisation, l'organe de prise est une vis ou une tige filetée, le trou d'ancrage étant un trou taraudé.

Selon un quatrième aspect, l'invention a pour objet un ensemble monté, prêt à l'extraction, d'un dispositif d'extraction d'un roulement à rouleaux extractible sur un roulement à rouleaux extractible monté,
▪ comprenant, disposés de façon sensiblement coaxiale :
   ∘ un assemblage d'un roulement à rouleaux extractible et de son arbre central et/ou de son logement périphérique tel que décrit, l'arbre central et/ou le logement périphérique comportant une face transversale accessible sur laquelle coopère en compression une face d'appui transversale du dispositif d'extraction d'un roulement à rouleaux extractible,
   ∘ un dispositif d'extraction d'un roulement à rouleaux extractible dont les organes de prise sont reçus dans et coopèrent avec des trous d'ancrage du roulement débouchant sur la face transversale accessible du roulement du côté de la face transversale accessible de l'arbre central et/ou du logement périphérique.
▪ de telle sorte que l'actionnement des moyens de coulissement axial relatif des au moins deux organes de prise et de la au moins une face d'appui transversale, dans le sens de l'extraction du roulement est tel que les au moins deux organes de prise exercent sur le roulement une traction propre à l'extraire de son arbre central et/ou de son logement périphérique.

Selon un cinquième aspect, l'invention a pour objet un procédé d'extraction d'un roulement à rouleaux de l'arbre central et/ou du logement périphérique auquel le roulement est solidarisé de façon fixe, dans lequel :
▪ on dispose d'un roulement à rouleaux extractible tel que décrit précédemment, ayant au moins deux trous d'ancrage,
▪ on dispose d'un dispositif d'extraction d'un roulement à rouleaux extractible tel que décrit précédemment,
▪ on assemble le dispositif d'extraction sur le roulement de sorte qu'ils soient sensiblement coaxiaux, la au moins une face d'appui transversale du dispositif d'extraction en appui en compression avec la face transversale accessible de l'arbre central et/ou du logement périphérique, et on introduit dans et on fait coopérer les au moins deux organes de prise du dispositif d'extraction avec des trous d'ancrage du roulement,
▪ et on réalise un coulissement axial relatif des au moins deux organes de prise et de la au moins une face d'appui transversale du dispositif d'extraction, dans le sens de l'extraction du roulement, de telle sorte à exercer sur le roulement une traction propre à l'extraire de son arbre central et/ou de son logement périphérique.

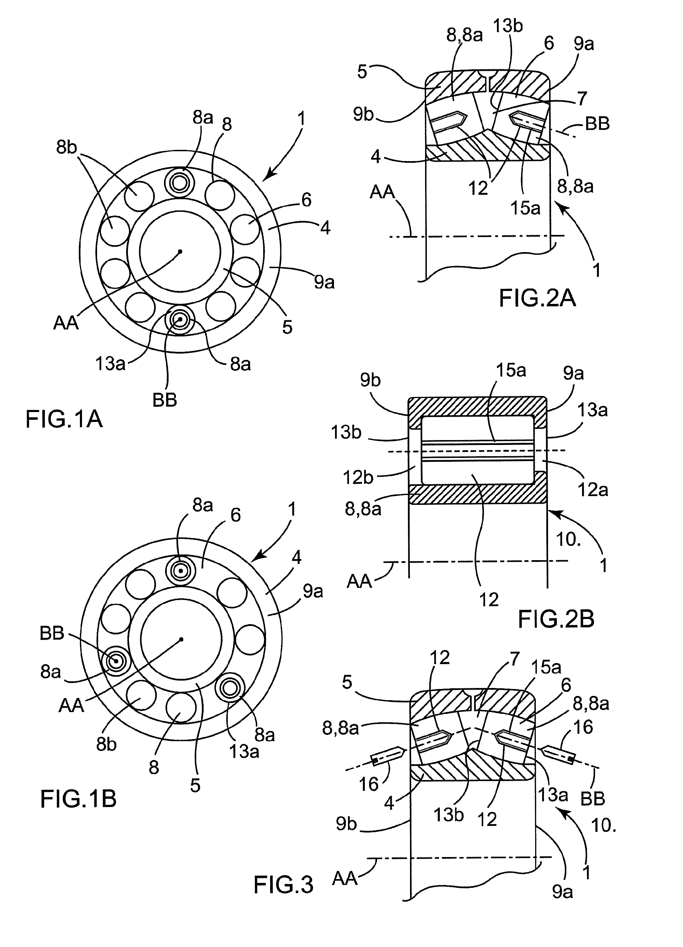

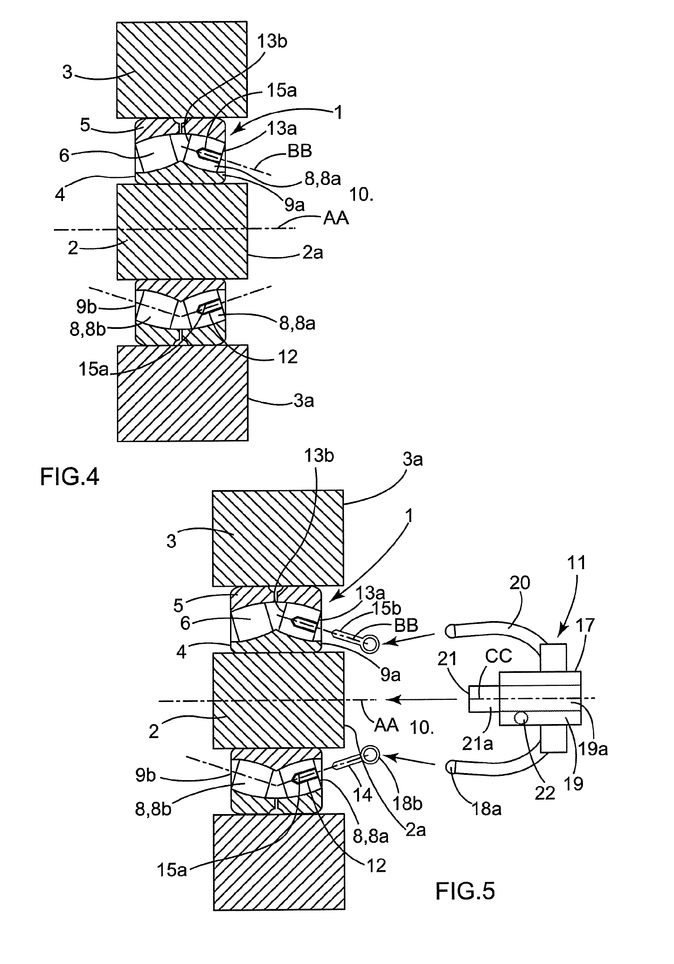

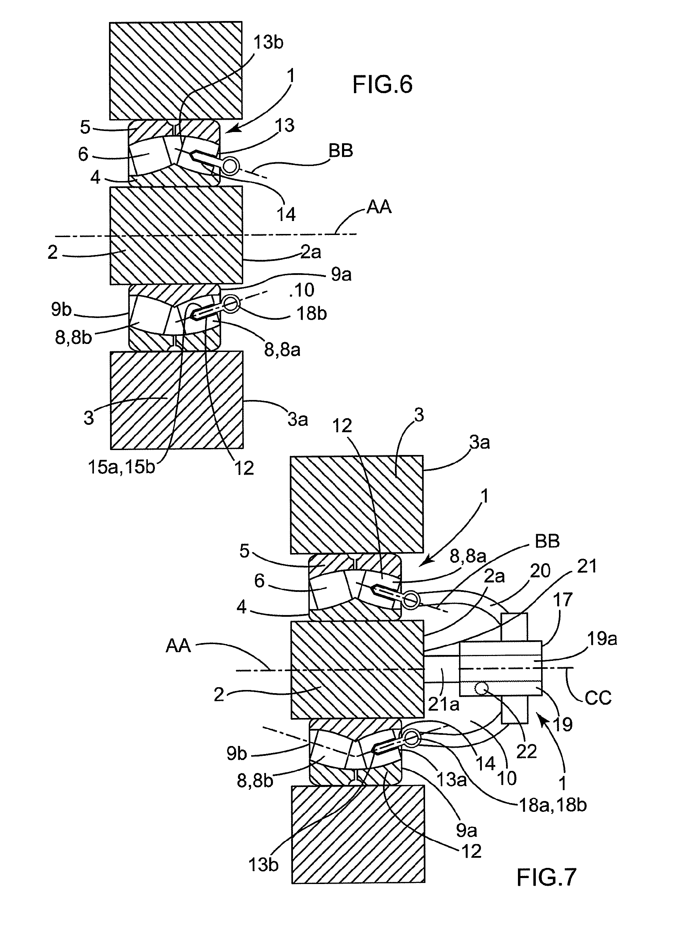

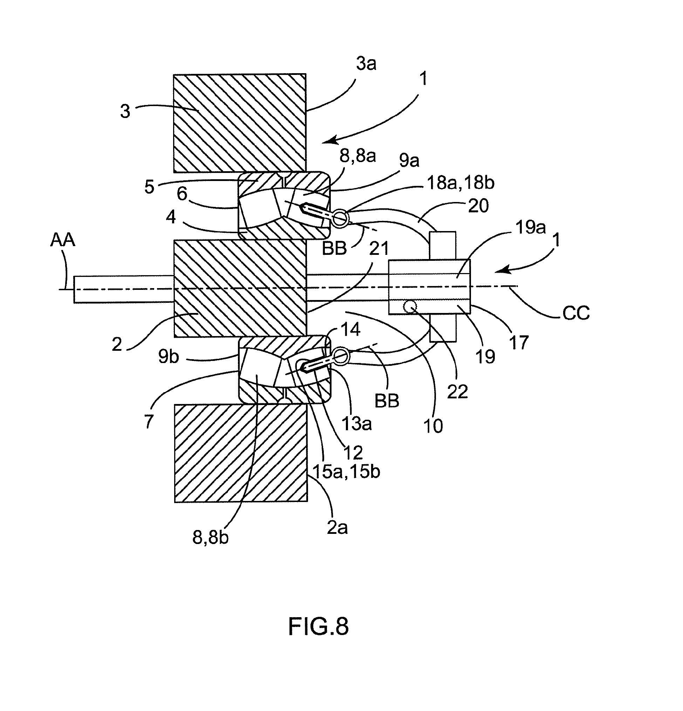

D'autres caractéristiques et avantages de l'invention ressortiront clairement de la description qui en est faite ci-après, à titre indicatif et nullement limitatif, en référence aux dessins annexés, dans lesquels :
▪ la figure 1A est une vue en élévation d'un roulement selon l'invention dans une réalisation dans laquelle il comporte sur une face transversale extérieure accessible deux trous d'ancrage, ici libres, diamétralement opposés ménagés dans deux rouleaux à trous d'ancrage également diamétralement opposés,
▪ la figure 1B est une vue analogue à la figure 1A, dans laquelle le roulement comporte trois trous d'ancrage ménagés dans trois rouleaux à trous d'ancrage,
▪ la figure 2A est une vue partielle en coupe axiale, au droit d'un rouleau à trou d'ancrage, d'un roulement selon l'invention, ici un roulement à rouleaux sphériques à deux rangées de rouleaux, comportant des trous d'ancrage borgnes sur chacune des rangées,
▪ la figure 2B est une vue analogue à la figure 2A, le roulement étant ici un roulement à rouleaux cylindriques à une rangée de rouleaux, comportant des trous d'ancrage traversant,
▪ la figure 3 est une vue analogue à la figure 2A, illustrant des corps de bouchage destinés à emplir les trous d'ancrage pour assurer la fonction de roulement,
▪ la figure 4 est une vue en coupe axiale, au droit d'un rouleau à trou d'ancrage, d'un assemblage comprenant un roulement selon l'invention, ici un roulement à rouleaux sphériques à deux rangées de rouleaux, comportant pour une rangée de rouleaux des trous d'ancrage borgnes, un arbre central et un logement périphérique, le roulement étant monté sur l'arbre et le logement,
▪ la figure 5 est une vue analogue à la figure 4, illustrant l'assemblage comprenant un roulement à trous d'ancrage, un arbre central et un logement périphérique, et un dispositif d'extraction de roulement dont les organes de prise et les moyens de traction sont dissociés les uns des autres et dissociés du roulement,
▪ la figure 6 est une vue analogue à la figure 5, dans laquelle les organes de prise sont montés dans les trous d'ancrage, les autres parties constitutives du dispositif d'extraction de roulement n'étant ici pas représentées,
▪ la figure 7 est une vue analogue à la figure 6, dans laquelle le dispositif d'extraction de roulement est associé au roulement en vue de l'extraction,
▪ la figure 8 est une vue analogue à la figure 7, dans laquelle l'extraction est réalisée sensiblement à mi-course.

Un roulement à rouleaux extractible 1 - conventionnellement dénommé dans la suite de la description par ellipse « roulement 1 » - est destiné à faire partie d'un assemblage ayant un axe AA et comprenant ce roulement 1, un arbre central 2 et un logement périphérique 3, par exemple un arbre 2 rotatif et un logement 3 fixe (figure 4). L'arbre central 2 comporte une face transversale d'extrémité accessible 2a et le logement périphérique 3 comporte une face d'extrémité accessible 3a, et ce d'un même coté du roulement 1.

Le terme « transversal » (avec ses désinences usuelles) se réfère conventionnellement à ce qui est sensiblement perpendiculaire (y compris perpendiculaire) à l'axe AA.

Le roulement 1, d'axe AA, comprend une bague intérieure 4, une bague extérieure 5 et, dans un espace entre les deux bagues 4 et 5, un agencement à rouleaux 6 incluant une cage 7 et des - à savoir N - rouleaux 8, chacun d'axe BB. Selon les réalisations et les configurations, N est un nombre pair ou impair.

Les bagues 4 et 5 et l'agencement à rouleaux 6, et par voie de conséquence le roulement 1, peuvent faire l'objet de différentes variantes de réalisation. D'autre part, le roulement 1 peut comporter des moyens d'étanchéité et des pièces, organes ou dispositifs annexes ou connexes.

Le roulement 1, à savoir la bague intérieure 4, la bague extérieure 5 et les rouleaux 8, est limité des deux côtés par deux faces transversales 9a, 9b.

La bague intérieure 4 est montée rigidement calée sur l'arbre central 2 et/ou la bague extérieure 5 est montée rigidement calée dans le logement périphérique 3. L'une au moins des faces transversales 9a, 9b de l'agencement à rouleaux 6 est accessible depuis l'extérieur de l'assemblage 1 + 2 + 3 soit parce qu'elle est naturellement découverte soit parce que, bien que masquée par un élément masquant, elle a été découverte par enlèvement de cet élément masquant.

Le terme « accessible » (avec ses désinences usuelles) doit être compris comme signifiant que l'espace 10 attenant à la face transversale 9a, 9b considérée, qui se trouve à l'extérieur de l'assemblage 1 + 2 + 3, qui s'étend dans la direction de l'axe AA au droit du roulement 1, est libre (non occupé ou entravé) de sorte à permettre le passage du roulement 1 lors de son extraction.

Par convention, la face transversale qui est accessible et permet le passage du roulement 1 lors de son extraction est dénommée « face transversale accessible » et référencée 9a. Cette convention n'exclut pas la réalisation dans laquelle les deux faces transversales 9a et 9b du roulement 1 sont accessibles et permettent le passage du roulement 1 lors de son extraction.

La face transversale accessible 9a est située, par rapport au roulement 1 du même côté que la face transversale d'extrémité accessible 2a de l'arbre central 2 et de la face d'extrémité accessible 3a du logement périphérique 3. Dans la réalisation représentée, non exclusive d'autres, les faces 2a, 3a et 9a sont coplanaires ou proches d'être coplanaires, alors que le roulement 1 est monté dans l'assemblage 1 + 2 + 3.

Selon les réalisations, d'une part, l'agencement à rouleaux 6 comporte soit une seule rangée de N rouleaux 8 (figure 2B), laquelle rangée de N rouleaux 8 étant alors attenante aux deux faces transversales 9a et 9b soit deux rangées de N rouleaux 8 chacune (figure 2A), chacune de ces deux rangées de N rouleaux 8 étant attenante à chacune des deux faces transversales 9a et 9b.

D'autre part, l'agencement à rouleaux 6 est soit du type à rouleaux 8 cylindriques (figure 2B) soit du type ou à rouleaux 8 sphériques (figure 2A) soit du type à rouleaux 8 coniques (cette réalisation n'est pas représentée mais, pour l'homme du métier, se déduit aisément de celles qui le sont). Ainsi, selon les réalisations, l'axe BB d'un rouleau 8 est parallèle ou incliné par rapport à l'axe AA du roulement 1. Par ailleurs, et en particulier, il peut exister sur l'une ou l'autre bague 4, 5 un petit rebord en saillie situé en regard des rouleaux 8.

De façon plus spécifique, le diamètre de l'alésage de la bague intérieure 5 est au moins égal à 150 mm. En particulier, le roulement 1 peut être qualifié de « gros roulement », à savoir un roulement dont le diamètre de l'alésage de la bague intérieure 5 est égal ou supérieur à 180 mm. Cette caractéristique est donnée à titre exemplatif.

Grâce à un dispositif 11 d'extraction, le roulement 1 est apte à être extrait de l'arbre central 2 et/ou du logement périphérique 3 du côté de sa face transversale accessible 9a. Le terme « extrait » (avec ses désinences usuelles) signifie dégager, sortir, séparer.

Le roulement 1 est pourvu d'au moins deux (figure 1A), plus généralement de n, trous d'ancrage 12, ménagés dans au moins deux, plus généralement dans n, rouleaux à trou d'ancrage 8a faisant partie des N rouleaux 8.

Par conséquent, les N rouleaux 8 se répartissent en n rouleaux à trou d'ancrage 8a et N-n rouleaux sans trou d'ancrage 8b.

Les n rouleaux à trou d'ancrage 8a sont espacés les uns de l'autre, et plus particulièrement espacés sensiblement régulièrement (y compris également espacés) autour de l'axe AA, un même nombre de rouleaux 8 étant interposés entre chaque paire de deux rouleaux à trou d'ancrage 8a voisins.

Selon une réalisation, les n rouleaux à trou d'ancrage 8a et les N-n rouleaux sans trou d'ancrage 8b sont analogues, si ce n'est la présence ou l'absence du trou d'ancrage 12 respectivement pour les n rouleaux à trou d'ancrage 8a et pour les N-n rouleaux sans trou d'ancrage 8b.

Le nombre n de rouleaux à trou d'ancrage 8a est choisi en fonction du nombre N de rouleaux 8 et de sorte à pouvoir assurer tant la fonction de roulement que la fonction d'extraction mise en oeuvre par l'entremise des trous d'ancrage 12, à savoir une optimisation des efforts d'extraction.

Ainsi, dans le cas de la figure 1A, il est prévu n = 2 rouleaux à trou d'ancrage 8a, le nombre N de rouleaux 8, ici égal à dix, étant un nombre pair. Dans le cas de la figure 1B, il est prévu n = 3 rouleaux à trou d'ancrage 8a, le nombre N de rouleaux 8, ici égal à neuf, étant un nombre impair car deux rouleaux sans trou d'ancrage 8b (c'est-à-dire un nombre pair de rouleaux sans trou d'ancrage 8b) sont interposés entre deux rouleaux à trou d'ancrage 8a. Si, au contraire un nombre impair de rouleaux sans trou d'ancrage 8b sont interposés entre deux rouleaux à trou d'ancrage 8a, le nombre N de rouleaux 8 est un nombre pair.

Généralement, le roulement 1 comporte un plus grand nombre N-n de rouleaux sans trou d'ancrage 8b et un plus petit nombre n de rouleaux à trou d'ancrage 8a.

Avec n < N-n, il y a moins de rouleaux à trou d'ancrage 8a que de rouleaux sans trou d'ancrage 8b. Avec n ≤ ½ (N-n), le nombre de rouleaux à trou d'ancrage 8a est inférieur ou égal à la moitié du nombre de rouleaux sans trou d'ancrage 8b. Avec n ≤ ¼ (N-n), le nombre de rouleaux à trou d'ancrage 8a est inférieur ou égal au quart du nombre de rouleaux sans trou d'ancrage 8b. Ces données sont exemplatives.

Pour autant, il ne peut être exclu, dans certaines réalisations ou n = N que les N rouleaux 8 soient tous des rouleaux à trous d'ancrage 8a, le roulement 1 ne comportant aucun rouleau sans trou d'ancrage.

Selon une réalisation ou n = 3 (figure 1 B), il est prévu trois trous d'ancrage 12, ménagés dans trois rouleaux à trou d'ancrage 8a espacés les uns des autres d'un espacement angulaire - autour de l'axe AA - sensiblement égal à 120° (y compris égal à 120°). Cette réalisation est donnée à titre exemplatif. Comme indiqué précédemment, selon les réalisations N est un nombre pair ou impair.

Tous les rouleaux 8, sans trou d'ancrage 8b comme avec trou d'ancrage 8a, participent à assurer la fonction de roulement inhérente au roulement 1. Les n rouleaux à trou d'ancrage 8a participent en outre, au moment où cela est souhaité, à assurer la fonction d'extraction du roulement 1 de l'arbre 2 et du logement 3. La fonction de roulement est mise en oeuvre lors de l'utilisation même du roulement 1 pour son usage propre. Lorsque le roulement 1 n'est plus utilisé ou ne le sera plus, et lorsque l'on souhaite le dégager, le sortir et le séparer de l'arbre 2 et du logement 3, la fonction de roulement n'est plus mise en oeuvre et ne le sera plus et, au contraire, la fonction d'extraction est alors mise en oeuvre.

Dans une réalisation non limitative, les n trous d'ancrage 12 sont semblables entre eux (y compris identiques) au regard de la forme, des dimensions, de l'agencement et de la disposition relative sur les n rouleaux à trou d'ancrage 8a.

Selon une réalisation, un trou d'ancrage 12 est de forme générale rectiligne allongée au moins pseudo cylindrique ou inclus dans une enveloppe au moins pseudo cylindrique, et en particulier cylindrique. Un tel trou d'ancrage 12 s'étend sensiblement parallèlement (y compris parallèlement) à l'axe BB du rouleau à trou d'ancrage 8a dans lequel il est ménagé. Plus particulièrement, un trou d'ancrage 12 est sensiblement coaxial (y compris coaxial) avec le rouleau à trou d'ancrage 8a dans lequel il est ménagé.

Les trous d'ancrage 12 s'étendent au moins dans la direction de l'axe AA du roulement 1. Selon une réalisation, ils s'étendent sensiblement parallèlement (y compris parallèlement) à l'axe AA du roulement 1 notamment lorsqu'ils sont coaxiaux des rouleaux cylindriques à trou d'ancrage 8a dans lesquels ils sont ménagés. Selon une autre réalisation, ils s'étendent avec une inclinaison par rapport à l'axe AA du roulement 1, notamment lorsqu'ils sont coaxiaux des rouleaux coniques à trou d'ancrage 8a dans lesquels ils sont ménagés.

Un trou d'ancrage 12 débouche, par une ouverture d'accès terminale 12a, dans une face d'extrémité transversale accessible 13a du rouleau à trou d'ancrage 8a dans lequel il est ménagé. Cette face d'extrémité transversale accessible 13a est une face accessible et elle est située du côté et vers la face transversale accessible 9a.

Selon une première réalisation, un trou d'ancrage 12 est un trou borgne (figure 2A) n'ayant qu'une unique ouverture d'accès 12a dans le rouleau à trou d'ancrage 8a dans lequel il est ménagé, cette ouverture d'accès 12a étant située dans la face d'extrémité transversale accessible 13a du rouleau à trou d'ancrage 8a et du côté et vers la face transversale accessible 9a du roulement 1.

Dans cette première réalisation, et selon une possibilité, le trou d'ancrage borgne 12 s'étend sur une longueur de l'ordre de, ou inférieure à, la moitié de la longueur du rouleau à trou d'ancrage 8a dans lequel le trou d'ancrage borgne 12 est ménagé, cette longueur étant comptée dans la direction du trou d'ancrage borgne 12. Selon une autre possibilité, le trou d'ancrage borgne 12 s'étend sur une longueur de l'ordre de, ou inférieure au tiers de la longueur du rouleau à trou d'ancrage 8a. Une telle disposition constructive a pour but de permettre aux rouleaux à trous d'ancrage 8a d'assurer au mieux leur fonction de roulement.

Selon une seconde réalisation, un trou d'ancrage 12 est un trou traversant le rouleau à trou d'ancrage 8a dans lequel il est ménagé (figure 2B), ayant, d'une part, une ouverture d'accès 12a située dans la face d'extrémité transversale accessible 13a du rouleau à trou d'ancrage 8a et du côté et vers la face transversale accessible 9a du roulement et, d'autre part, une autre ouverture 12b, située dans la face d'extrémité transversale 13b du rouleau à trou d'ancrage 8a opposée à la face d'extrémité transversale accessible 13a. Selon les cas et les configurations, la face d'extrémité transversale 13b du rouleau à trou d'ancrage 8a opposée à la face d'extrémité transversale accessible 13a est une face accessible ou une face qui n'est pas accessible.

Dans la seconde réalisation considérée, et selon un mode d'exécution particulier, il est possible de prévoir que la cage 7 de l'agencement à rouleaux 6 est pourvue d'un évidement situé en regard des trous d'ancrage 12 traversant et plus particulièrement au droit des autres ouvertures 12b. Une telle disposition constructive a pour but de permettre à des organes de prise 14 du dispositif 11 d'extraction du roulement de traverser les trous d'ancrage et de saillir des autres ouvertures 12b sans être entravé par la cage 7.

Dans le même but de permettre aux rouleaux à trous d'ancrage 8a d'assurer au mieux leur fonction de roulement, comme déjà indiqué, il est possible, selon une réalisation, de prévoir qu'un trou d'ancrage 12 a un diamètre limité au regard du diamètre du rouleau à trou d'ancrage 8a dans lequel le trou d'ancrage 12 est ménagé. Par exemple, un trou d'ancrage 12 a un diamètre inférieur à de l'ordre du tiers du diamètre extérieur du rouleau à trou d'ancrage 8a, en particulier un diamètre inférieur à de l'ordre du quart du diamètre extérieur du rouleau à trou d'ancrage 8a.

Il est à la portée de l'homme du métier de fixer au cas par cas le compromis optimal entre le nombre n de rouleaux à trou d'ancrage 8a, le nombre N-n de rouleaux sans trou d'ancrage 8b, la caractéristique « borgne » ou « traversant » des trous d'ancrage 8a, le diamètre des trous d'ancrage 8a...

Avec les dispositions qui précèdent, pour autant que les combinaisons soient compatibles, il se peut que les n trous d'ancrage 12 débouchent soit sur une face transversale accessible 9a du roulement 1 soit sur chacune des deux faces transversales 9a, 9b du roulement 1 dont l'une seulement - 9a - ou l'une et l'autre - 9a et 9b - est ou sont mise(s) en oeuvre pour l'extraction du roulement 1.

Chaque trou d'ancrage 12 comporte au moins un moyen interne d'ancrage 15a, tel qu'une saillie, cette réalisation étant donnée à titre exemplatif, au moins en traction en direction de la même face transversale accessible 9a du roulement 1 dans laquelle débouchent les n trous d'ancrage 12 par les ouvertures d'accès 12a.

Les trous d'ancrage 12 sont aptes et destinés à pouvoir recevoir - par coulissement relatif - et coopérer avec les organes de prise 14 du dispositif 11 d'extraction du roulement, en particulier au nombre de n, chaque organes de prise 14 coopérant alors avec un trou d'ancrage 12.

Chaque organe de prise 14 est pourvu d'au moins un moyen externe d'ancrage 15b tel qu'une saillie, cette réalisation étant donnée à titre exemplatif.

Le moyen interne d'ancrage 15a d'un trou d'ancrage 12 est complémentaire du moyen externe d'ancrage 15b d'un organe de prise 14. Il en est de même s'il est prévu plusieurs moyens 15a, 15b.

Par la coopération organe de prise 14 - trou d'ancrage 12 et la coopération moyen externe d'ancrage 15b - moyen interne d'ancrage 15a, chaque trou d'ancrage 12, et par suite chaque rouleau à trou d'ancrage 8a - et donc in fine le roulement 1 -, peut être rendu solidaire de chaque organe de prise 14, et par suite du dispositif 11 d'extraction. Par l'expression « rendu solidaire », il faut comprendre que, alors que les organes de prise 14 coopèrent avec les trous d'ancrage 12 et que au moins une traction est exercée par les organes de prise 14 sur les rouleaux à trou d'ancrage 8a en direction de la face transversale accessible 9a du roulement 1, les rouleaux à trou d'ancrage 8a sont soumis à la même traction que celle exercée sur les organes de prise 14 du dispositif 11 d'extraction. En d'autres termes, par la coopération organe de prise 14 - trou d'ancrage 12 et moyen externe d'ancrage 15b - moyen interne d'ancrage 15a, il est possible, en tirant sur les organes de prise 14 de tirer sur les rouleaux à trou d'ancrage 8a et ainsi sur le roulement 1 dans la direction et le sens de son extraction de l'arbre central 2 et du logement périphérique.

Selon une réalisation, un trou d'ancrage 12 est un trou taraudé ou analogue, un moyen interne d'ancrage 15a étant un taraudage ou analogue, alors que l'organe de prise 14 est une vis ou une tige filetée ou analogue, le moyen externe d'ancrage 15b étant un pas de vis ou analogue. Dans ce cas, leur assemblage est réalisé par un pivotement de vissage.

Selon une réalisation, il est également prévu des corps de bouchage 16 (figure 3) destinés à coopérer avec le roulement 1. De tels corps de bouchage 16 sont aptes à être reçus dans et coopérer avec les trous d'ancrage 12, dont ils ont une forme complémentaire, de sorte à les emplir en particulier totalement, et ainsi à être rendus solidaires des rouleaux à trou d'ancrage 8a, tout en étant associés au roulement 1 de façon amovible. Dans une réalisation, un tel corps de bouchage 16 est de forme générale rectiligne allongée au moins pseudo cylindrique ou inclus dans une enveloppe au moins pseudo cylindrique, et en particulier cylindrique et dans le même matériau que celui constitutifs des rouleaux 8, ou en matériau synthétique comme une matière plastique.

Lorsque le roulement 1 est destiné à assurer la fonction de roulement et lorsqu'il assure cette fonction, les corps de bouchage 16, notamment lorsqu'ils sont constitués du même matériau que les rouleaux 8, emplissent en particulier totalement les trous d'ancrage 12 et sont solidaires des rouleaux à trou d'ancrage 8a dont la masse et la résistance sont ainsi proches, respectivement, de celles des rouleaux sans trou d'ancrage 8b. Une telle disposition constructive a pour but de permettre de préserver au mieux les qualités du roulement 1 nécessaire au bon accomplissement de la fonction de roulement.

Dans la réalisation où le trou d'ancrage 12 est un trou taraudé ou analogue, le corps de bouchage 16 se présente sous la forme d'une vis ou analogue. En outre, le corps de bouchage 16 comporte une tête permettant son vissage dans et son dévissage du trou d'ancrage 12.

Lorsque le roulement 1 n'est pas destiné à assurer la fonction de roulement et lorsqu'il est souhaité qu'il soit extrait de l'arbre 2 et du logement 3, les corps de bouchage 16 sont enlevés des trous d'ancrage 12, en particulier par dévissage. Les trous d'ancrage 12 peuvent alors être utilisés pour l'extraction du roulement 1.

Selon une présentation, le roulement 1 est tel que les trous d'ancrage 12 sont garnis des corps de bouchage 16. Selon une autre présentation, le roulement 1 est tel que les trous d'ancrage 12 sont libres, les corps de bouchage 16 ayant été enlevés. Selon une autre présentation, le roulement 1 est tel que les organes de prise 14 sont reçus dans et coopèrent avec les trous d'ancrage 12, de sorte, les moyens d'ancrage 15a et 15b coopèrent et sont rendus solidaires, comme exposé.

Le dispositif 11 d'extraction comporte un axe CC. Lorsque le dispositif 11 d'extraction forme avec un roulement 1 monté sur l'arbre 2 et le logement 3 dont il doit être extrait un ensemble monté, prêt à l'extraction, l'assemblage 1 + 2 +3 et le dispositif 11 d'extraction sont disposés de façon sensiblement coaxiale, les axes AA et BB étant sensiblement confondus.

Le dispositif 11 d'extraction est, bien entendu, adapté au roulement 1 à rouleaux extractible à extraire, de part sa structure et sa disposition. Par « adapté », il faut comprendre qu'à un roulement 1 à rouleaux extractible à extraire de caractéristiques données en ce qui concerne la géométrie du roulement, et tout spécialement des rouleaux à trous d'ancrage (8a), correspond un dispositif 11 d'extraction donné de caractéristiques, en ce qui concerne la géométrie, en adéquation avec celles du roulement, ou bien que le dispositif 11 d'extraction est adaptable à différentes géométrie de roulements 1 à rouleaux extractible à extraire, de sorte à pouvoir être mis en oeuvre avec des roulements 1 à rouleaux extractible de différentes géométrie soit sans changement structurel soit moyennant une adaptation structurelle de la géométrie.

Le dispositif 11 d'extraction comprend au moins deux, plus généralement p, organes de prise 14 ayant chacun au moins un moyen externe d'ancrage 15b tel qu'une saillie, cette réalisation étant donnée à titre exemplatif, et s'étendant au moins dans la direction de l'axe CC et des moyens de traction d'extraction 17 aptes à exercer sur des organes de prise 14 une traction d'extraction relative par rapport au roulement 1 dans une direction selon l'axe AA du roulement 1, ou comportant une composante selon l'axe AA, et dans le sens allant vers l'extérieur du roulement 1 à partir de la face transversale accessible 13a du roulement où débouchent des trous d'ancrage 12. Selon une réalisation, les organes de prise 14 s'étendent sensiblement parallèlement (y compris parallèlement) à l'axe CC du dispositif 11 d'extraction. Selon une autre réalisation, ils s'étendent avec une inclinaison par rapport à l'axe CC du dispositif 11 d'extraction.

Le dispositif 11 d'extraction comprend les p organes de prise 14 et les moyens de traction 17 associés de façon fonctionnelle. Selon les cas, les p organes de prise 14 et les moyens de traction 17 sont également associés de façon structurelle entre eux en permanence ou, au contraire, ils ne sont associés de façon structurelle entre eux que pour et lors de l'extraction du roulement 1, étant, sinon, dissociés de façon structurelle (figure 5). Avec une telle réalisation, il est possible de réaliser d'abord l'association rigide organe de prise 14 - trou d'ancrage 12 lorsque cela est souhaité en vue de l'extraction du roulement 1, puis de réaliser l'association structurelle des organes de prise 14 aux moyens de traction 17 pourvus respectivement, à cet effet, d'organes d'association structurelle complémentaires 18a pour un organe de prise 14 et 18b pour les moyens mécanique de traction 14. Dans une réalisation, un organe d'association structurelle 18a d'un organe de prise 14 se présente sous la forme d'un oeillet, d'un anneau, d'une manille ou une forme analogue tandis qu'un organe d'association structurelle 18b des moyens de traction 17 se présente sous la forme d'un crochet, d'un tourillon ou une forme analogue. C'est ainsi qu'il faut comprendre que le dispositif 11 d'extraction comprend les organes de prise 14 et les moyens de traction 17.

La disposition des organes de prise 14 les uns par rapport aux autres est telle que l'on puisse assurer une coopération trou d'ancrage 12 - organe de prise 14, lorsque souhaité en vue de l'extraction du roulement 1. Dans cette situation, les p organes de prise 14 sont disposés espacés les uns de l'autre, et plus particulièrement espacés sensiblement régulièrement (y compris également espacés) autour de l'axe CC (et de l'axe AA). Des moyens externes d'ancrage 15b de plusieurs organes de prise 14 du dispositif 11 d'extraction coopèrent avec des moyens internes d'ancrage de plusieurs trous d'ancrage 12 du roulement 1, de sorte que le dispositif 11 d'extraction est rendu solidaire du roulement 1 pourvu des trous d'ancrage 12, au moins en traction. L'expression « rendu solidaire » doit être comprise comme exposé précédemment.

Le nombre p d'organes de prise 14 du dispositif 11 d'extraction est choisi de sorte à pouvoir coopérer avec des trous d'ancrage 12 de façon à assurer l'extraction du roulement 1. Dans une réalisation, p = n, chaque trous d'ancrage 12 étant associé à un organe de prise 14, et inversement. Le cas échéant, il peut être prévu un dispositif 11 d'extraction comportant un nombre plus élevé d'organes de prise 14 afin de pouvoir être associé à une variété de roulements 1 à extraire, comportant un nombre n de trous d'ancrage 12 plus ou moins variable. En général, il est prévu que chaque trou d'ancrage 12 reçoive un organe de prise, le nombre n de trous d'ancrage 12 étant adapté aux besoins de l'extraction.

Dans une réalisation, les p organes de prise 14 sont semblables entre eux (y compris identiques) au regard de la forme, des dimensions, de l'agencement et de la disposition. Dans d'autres réalisations, les p organes de prise 14 ne sont pas tous semblables entre eux (en particulier identiques) en particulier si les n trous d'ancrage 12 ne sont pas non plus tous semblables entre eux.

Selon une réalisation ou p = 3, il est prévu trois organes de prise 14 espacés les uns des autres d'un espacement angulaire - autour de l'axe CC (et de l'axe AA lorsque le dispositif 11 d'extraction est monté sur le roulement 1) - sensiblement égal à 120° (y compris égal à 120°). Cette réalisation est donnée à titre exemplatif.

Selon une réalisation, un organe de prise 14 est de forme générale rectiligne allongée au moins pseudo cylindrique ou inclus dans une enveloppe au moins pseudo cylindrique, et en particulier cylindrique, telle qu'une tige.

Selon une réalisation, un organe de prise 14 est une vis ou une tige filetée ou analogue, le moyen externe d'ancrage 15b étant un pas de vis ou analogue. Une telle réalisation convient au cas où un trou d'ancrage 12 est un trou taraudé ou analogue, un moyen interne d'ancrage 15a étant un taraudage ou analogue.

Les moyens de traction d'extraction 17 sont par exemple dérivés de ceux connus ou à la portée de l'homme du métier s'agissant des extracteurs de roulements.

Dans une réalisation, les moyens de traction 17 comportent un corps 19 et, solidaires, du corps, des moyens 20 de liaison entre le corps 17 et les p organes de prise 14, une face d'appui transversale 21 apte à coopérer en compression sur la face transversale accessible 2a de l'arbre central 2, et des moyens 22 de coulissement axial relatif des p organes de prise 14 et de la face d'appui transversale 21, dans la direction et le sens de l'extraction du roulement 1.

Le corps 19 peut prendre la forme d'un moyeu d'axe CC, pourvu par exemple d'un perçage axial de guidage 19a, dans une réalisation donnée à titre exemplatif.

Les moyens de liaison 20 peuvent prendre la forme de p tiges conformées, s'étendant à partir de la périphérie du corps 19 où elles sont fixées rigidement, dans la direction de l'axe CC, et qui, à l'opposé, se prolongent chacune par un organe de prise 14 solidaire de la tige 20 dans le cas où les p organes de prise 14 et les moyens de traction 17 sont associés de façon structurelle entre eux en permanence, ou sont pourvues chacune d'un organe d'association structurelle 18a avec un organe de prise 14, dans le cas où les p organes de prise 14 et les moyens mécaniques de traction 17 sont dissociés de façon structurelle. Les réalisations qui viennent d'être exposées sont données à titre exemplatif. Dans tous les cas, les moyens de liaison 20 sont aptes à exercer - pour la transmettre - une traction d'extraction sur les organes de prise 14.

La face d'appui transversale 21 apte à coopérer en compression sur la face transversale accessible 2a de l'arbre central 2 peut être formée par la face transversale terminale 21, d'aire suffisante, d'une pièce 21a de forme générale cylindrique d'axe CC, montée, vers l'opposé de la face transversale 21, dans le perçage axial du corps 19, de sorte à pouvoir coulisser axialement par rapport au corps 19. Cette réalisation est donnée à titre exemplatif et d'autres réalisations équivalentes peuvent être envisagées, étant à la portée de l'homme du métier.

Selon une autre réalisation, il est prévu que la face d'appui transversale 21 soit apte à coopérer en compression sur la face transversale accessible 3a du logement périphérique 3. Selon une autre réalisation, il est prévu non pas une seule face d'appui transversale 21, mais deux faces d'appui transversales 21, l'une apte à coopérer avec la face transversale accessible 2a de l'arbre 2 et l'autre avec la face transversale accessible 3a du logement périphérique 3.

Les moyens 22 de coulissement axial relatif peuvent être par exemple du type mécanique à roue dentée et crémaillère ou du type piston hydraulique ou pneumatique, interposés entre le corps 19 et la pièce 21 a. Ces réalisations sont données à titre exemplatif.

L'invention concerne à la fois le dispositif 11 d'extraction tel qu'il vient d'être décrit, moyennant, avec ses réalisations équivalentes et un ensemble monté, prêt à l'extraction, comprenant le dispositif 11 d'extraction monté sur un roulement 1 d'un assemblage 1 + 2 + 3.

Un tel ensemble 1 + 2 + 3 + 11 comprend, disposés de façon sensiblement coaxiale, selon les axes AA et CC alors au moins sensiblement confondus (y compris confondus), un assemblage 1 + 2 + 3 et un dispositif 11 d'extraction associé rigidement au rouleau 1 les organes de prise 14 étant reçus dans et coopérant avec les trous d'ancrage 12 du roulement 1 débouchant sur la face transversale accessible 13a du côté de laquelle se trouve le dispositif 11 d'extraction et les moyens 15a et 15b coopérant entre elles, pour permettre l'application au roulement d'une traction d'extraction exercée par le dispositif 11 d'extraction.

Avec un tel ensemble 1 + 2 + 3 + 11, l'actionnement des moyens 22 de coulissement axial relatif dans le sens de l'extraction du roulement 1 est tel que les organes de prise 14 exercent sur le roulement 1 une traction propre à l'extraire de son arbre central 2 et/ou de son logement périphérique 3.

Le procédé d'extraction du roulement 1 de l'arbre central 2 et/ou du logement périphérique 3 auquel le roulement 1 est solidarisé de façon fixe, est tel que l'on dispose d'un roulement 1 ayant les n trous d'ancrage 12 et d'un dispositif 11 d'extraction d'un roulement tel que décrit précédemment.

Alors que, le cas échéant, les trous d'ancrage 12 ont été préalablement libérés des corps de bouchage 16 qui s'y trouvaient, l'on assemble le dispositif 11 d'extraction sur le roulement 1 de sorte à être sensiblement coaxiaux, la face d'appui transversale 21 du dispositif 11 d'extraction pouvant venir en appui en compression sur la face transversale accessible 2a de l'arbre central 2 et l'on introduit dans et l'on fait coopérer les organes de prise 14 avec les trous d'ancrage 12, les moyens d'ancrage 15a et 15b coopérant. Lorsque le trou d'ancrage 12 est un trou taraudé et l'organe de prise 14 est une vis ou une tige filetée, leur assemblage est réalisé par un pivotement de vissage.

Selon les cas, soit l'on assemble au roulement 1 le dispositif 11 d'extraction comprenant les p organes de prise 14 et les moyens de traction 17 déjà associés de façon structurelle, et à cet effet l'on assemble les organes de prise 14 aux trous d'ancrage 12, soit, d'abord, l'on assemble au roulement 1 les organes de prise 14 (figure 6) et, ensuite, l'on assemble les moyens de traction 17 aux organes de prise 14, au moyen des organes d'association 18a et 18b (figure 7).

Puis, grâce à la mise en oeuvre des moyens 22 de coulissement et via les moyens de liaison 20, on fait coulisser axialement, au moins dans la direction de l'axe AA et de l'axe CC, les organes de prise 14 - et donc les rouleaux à trous d'ancrage 8a et in fine le roulement 1 - par rapport à la face d'appui transversale 21 et à la face transversale d'extrémité accessible 2a de l'arbre central 2, qui ont une position fixe dans la direction de l'axe AA, et dans le sens de l'extraction du roulement 1 (figure 8). Ainsi, l'on exerce sur le roulement 1 une traction propre à l'extraire de son arbre central 2 et/ou de son logement périphérique 3.

Le coulissement est d'une course suffisante pour que le roulement 1 soit totalement dégagé de l'arbre 2 et du logement 3.

Les dispositions structurelles et fonctionnelles décrites autorisent des trous d'ancrage 12 et des organes de prise 14 inclinés par rapport à l'axe AA du roulement dès lors qu'ils comportent une composante s'étendant parallèlement à l'axe AA.

## Revendications

1. Roulement (1) à rouleaux extractible, apte à être extrait de l'arbre central (2) et/ou du logement périphérique (3) auquel il est solidarisable de façon fixe, limité des deux côtés par deux faces transversales (9a, 9b) dont l'une au moins est une face transversale accessible (9a), comprenant une bague intérieure (4), une bague extérieure (5) et, dans un espace entre les deux bagues (4, 5), un agencement à rouleaux (6) incluant une cage (7) et des rouleaux (8) limités par deux faces transversales (13a, 13b) dont l'une au moins est une face transversale accessible (13a) située du côté de la face transversale accessible (9a), ledit roulement (1) étant pourvu d'au moins deux trous d'ancrage (12) ménagés dans au moins deux rouleaux à trou d'ancrage (8a) faisant partie des N rouleaux (8), espacés l'un de l'autre, plus particulièrement espacés sensiblement régulièrement, les au moins deux trous d'ancrage (12) débouchant par une ouverture d'accès terminale (12a) dans la face transversale accessible (13a), s'étendant au moins dans la direction de l'axe (AA) du roulement (1) et ayant au moins un moyen interne d'ancrage (15a) au moins en traction en direction d'une même face transversale accessible (9a) du roulement (1) dans laquelle débouchent les au moins deux trous d'ancrage (12), aptes et destinés à pouvoir recevoir par coulissement relatif, et coopérer de sorte à être rendus solidaires au moins en traction en direction de la face transversale accessible (13a) avec deux organes de prise (14) d'un dispositif (11) d'extraction du roulement.

2. Roulement (1) à rouleaux extractible selon la revendication 1, pourvu de n trous d'ancrage (12) ménagés dans n rouleaux à trou d'ancrage (8a) espacés les uns des autres d'un espacement angulaire sensiblement égal, n'étant au moins égal à deux et étant choisi en vue d'optimiser la répartition des efforts d'extraction du roulement (1), n'étant en particulier égal à trois, les rouleaux à trou d'ancrage (8a) étant alors espacés les uns des autres d'un espacement angulaire sensiblement égal à 120°.

3. Roulement (1) à rouleaux extractible selon l'une quelconque des revendications 1 et 2, dans lequel l'agencement à rouleaux (6) comporte une ou plusieurs rangées de rouleaux (8) et dans lequel l'agencement à rouleaux (6) est à rouleaux cylindriques ou à rouleaux coniques ou à rouleaux sphériques.

4. Roulement (1) à rouleaux extractible selon l'une quelconque des revendications 1 à 3, dans lequel un trou d'ancrage (12) s'étend sensiblement parallèlement à l'axe (BB) du rouleau à trou d'ancrage (8a) dans lequel il est ménagé, plus particulièrement un trou d'ancrage (12) est sensiblement coaxial avec le rouleau à trou d'ancrage (8a) dans lequel il est ménagé.

5. Roulement (1) à rouleaux extractible selon l'une quelconque des revendications 1 à 4, dans lequel un trou d'ancrage (12) s'étend dans la direction générale de l'axe (AA) du roulement (1), en particulier parallèle, sensiblement parallèlement ou peu incliné sur l'axe (AA).

6. Roulement (1) à rouleaux extractible selon l'une quelconque des revendications 1 à 5, dans lequel un trou d'ancrage (12) est un trou taraudé, un moyen interne d'ancrage (15a) du trou d'ancrage (12) étant un taraudage.

7. Roulement (1) à rouleaux extractible selon l'une quelconque des revendications 1 à 6, dans lequel un trou d'ancrage (12) a un diamètre inférieur à de l'ordre du tiers du diamètre extérieur du rouleau à trou d'ancrage (8a) dans lequel le trou d'ancrage (12) est ménagé.

8. Roulement (1) à rouleaux extractible selon l'une quelconque des revendications 1 à 7, dans lequel un trou d'ancrage (12) est un trou borgne.

9. Roulement (1) à rouleaux extractible selon la revendication 8, dans lequel un trou d'ancrage (12) borgne s'étend sur une longueur de l'ordre de, ou inférieure à, la moitié de la longueur du rouleau à trou d'ancrage (8a) dans lequel le trou d'ancrage (12) est ménagé comptée dans la direction du trou d'ancrage (12).

10. Roulement (1) à rouleaux extractible selon l'une quelconque des revendications 1 à 7, dans lequel un trou d'ancrage (12) est un trou traversant le rouleau à trou d'ancrage (8a) dans lequel il est ménagé.

11. Roulement (1) à rouleaux extractible selon la revendication 10, dans lequel la cage (7) de l'agencement à rouleaux (6) est pourvue d'un évidement situé en regard d'un trou d'ancrage (12) traversant.

12. Roulement (1) à rouleaux extractible selon l'une quelconque des revendications 1 à 11, dans lequel les trous d'ancrage (12) débouchent sur une seule face transversale accessible (13a) du roulement (1).

13. Roulement (1) à rouleaux extractible selon l'une quelconque des revendications 1 à 11, dans lequel des trous d'ancrage (12) débouchent sur chacune des deux faces transversales (13a, 13b) du roulement (1).

14. Roulement (1) à rouleaux extractible selon l'une quelconque des revendications 1 à 13, dans lequel les N rouleaux (8) sont tous des rouleaux à trou d'ancrage (8a).

15. Roulement (1) à rouleaux extractible selon l'une quelconque des revendications 1 à 14, dans lequel le diamètre d'alésage de la bague intérieure (4) est au moins égal à 150 mm, en particulier le roulement (1) à rouleaux extractible est un gros roulement (1) dont le diamètre le diamètre d'alésage de la bague intérieure est égal ou supérieur à 180 mm.

16. Roulement (1) à rouleaux extractible selon l'une quelconque des revendications 1 à 15, **caractérisé par** des corps de bouchage (16) aptes à être reçus dans et coopérer avec les trous d'ancrage (12), de sorte à être rendus solidaires, de façon amovible, des rouleaux à trou d'ancrage (8a).

17. Roulement (1) à rouleaux extractible selon la revendication 16, dans lequel les corps de bouchage (16) sont reçus dans et coopèrent avec les trous d'ancrage (12).

18. Roulement (1) à rouleaux extractible selon l'une quelconque des revendications 1 à 16, dans lequel les trous d'ancrage (12) sont libres.

19. Roulement (1) à rouleaux extractible selon l'une quelconque des revendications 1 à 16, apte à recevoir des organes de prise (14) d'un dispositif (11) d'extraction du roulement reçus dans et coopérant avec les trous d'ancrage (12), de sorte, les moyens d'ancrage (15a et 15b) coopérant, à être rendus solidaires au moins en traction en direction de la face transversale accessible (9a) du roulement (1).

20. Assemblage d'un roulement (1) à rouleaux extractible selon l'une quelconque des revendications 1 à 19 et de son arbre central (2) et/ou de son logement périphérique (3), la bague intérieure (4) étant montée rigidement sur l'arbre central (2) et la bague extérieure (5) étant montée rigidement dans le logement périphérique (3), la face transversale (9a) du roulement (1) dans laquelle débouche des trous d'ancrage (12) étant accessible depuis l'extérieur de l'assemblage (1 + 2 + 3).

21. Système comprenant un assemblage selon la revendication 20 et un dispositif (11) d'extraction d'un roulement (1) à rouleaux extractible de l'assemblage (1 + 2 + 3), adapté au roulement (1) à rouleaux extractible à extraire, ayant un axe (CC) et comprenant :
▪ au moins deux organes de prise (14) ayant au moins un moyen externe d'ancrage (15b), s'étendant au moins dans la direction de l'axe (CC), aptes - lorsque souhaité en vue de l'extraction du roulement (1) - à être disposés de façon espacés l'un de l'autre, plus particulièrement espacés sensiblement régulièrement autour de l'axe (CC), et à être reçus dans les au moins deux trous d'ancrage (12) du roulement (1), les moyens externes d'ancrage (15b) coopérant avec les moyens internes d'ancrage (15a) des trous d'ancrage (12) des rouleaux à trous d'ancrage (8a) pour l'association rigide organe de prise (14) / trou d'ancrage (12) au moins en traction en direction de la face transversale accessible (13a) du roulement (1) où débouchent des trous d'ancrage (12), le dispositif d'extraction (11) étant ainsi rendu solidaire du roulement (1),
▪ des moyens (17) aptes à exercer sur les au moins deux organes de prise (14) une traction d'extraction relative par rapport au roulement (1) dans une direction selon l'axe du roulement (1) - ou comportant une composante selon l'axe du roulement (1) -, et dans le sens allant vers l'extérieur du roulement (1) à partir de ladite face transversale accessible (13a) du roulement (1) où débouchent des trous d'ancrage (12).

22. Système selon la revendication 21, pourvu de trois organes de prise (14) espacés les uns des autres d'un espacement angulaire sensiblement égal à 120°.

23. Système selon l'une quelconque des revendications 21 et 22, dans lequel des moyens (17) aptes à exercer sur les au moins deux organes de prise (14) une traction d'extraction relative par rapport au roulement (1) dans une direction selon l'axe du roulement (1) - ou comportant une composante selon l'axe du roulement (1) -, et dans le sens allant vers l'extérieur du roulement (1) à partir de ladite face transversale accessible (13a) du roulement (1) où débouchent des trous d'ancrage (12) comportent :
▪ un corps (19) et, solidaires, du corps (19),
▪ des moyens de liaison (20) entre le corps (19) et les au moins deux organes de prise (14), aptes à exercer une traction d'extraction sur les au moins deux organes de prise (14), et
▪ au moins une face d'appui transversale (21) apte à coopérer en compression sur une face transversale accessible (2a, 3a) de l'arbre central (2) et/ou du logement périphérique (3) de l'assemblage (1 + 2 + 3) comprenant le roulement (1) à rouleaux extractible, l'arbre central (2) et/ou le logement périphérique (3),
▪ des moyens de coulissement axial relatif (22) des au moins deux organes de prise (14) et de la au moins une face d'appui transversale (21), dans le sens de l'extraction du roulement (1).

24. Système selon l'une quelconque des revendications 21 à 23, dans lequel l'organe de prise (14) est une vis ou une tige filetée, le trou d'ancrage (12) étant un trou taraudé.

25. Ensemble monté, prêt à l'extraction, d'un dispositif (11) d'extraction d'un roulement (1) à rouleaux extractible sur un roulement (1) à rouleaux extractible monté,
▪ comprenant, disposés de façon sensiblement coaxiale :
∘ un assemblage (1 + 2 + 3) d'un roulement (1) à rouleaux extractible et de son arbre central (2) et/ou de son logement périphérique (3) selon la revendication 20, l'arbre central (2) et/ou le logement périphérique (3) comportant une face transversale accessible (2a, 3a) sur laquelle coopère en compression une face d'appui transversale (21) du dispositif (11) d'extraction d'un roulement (1) à rouleaux extractible,
∘ un dispositif (11) d'extraction d'un roulement (1) à rouleaux extractible dont des organes de prise (14) sont reçus dans et coopèrent avec des trous d'ancrage (12) du roulement (1) débouchant sur la face transversale accessible (13a) du roulement (1) du côté de la face transversale accessible (2a, 3a) de l'arbre central (2) et/ou du logement périphérique (3).
▪ de telle sorte que l'actionnement des moyens de coulissement axial relatif (22) dans le sens de l'extraction du roulement (1) est tel que les au moins deux organes de prise (14) exercent sur le roulement (1) une traction propre à l'extraire de son arbre central (2) et/ou de son logement périphérique (3).

26. Procédé d'extraction d'un roulement (1) à rouleaux de l'arbre central (2) et/ou du logement périphérique (3) auquel le roulement (1) est solidarisé de façon fixe, dans lequel :
▪ on dispose d'un roulement (1) à rouleaux extractible selon l'une quelconque des revendications 1 à 19, ayant au moins deux trous d'ancrage (12),
▪ on dispose d'un dispositif (11) d'extraction d'un roulement (1) à rouleaux extractible selon l'une quelconque des revendications 21 à 24,
▪ on assemble le dispositif (11) d'extraction sur le roulement (1) de sorte qu'ils soient sensiblement coaxiaux, la au moins une face d'appui transversale (21) du dispositif (11) d'extraction en appui en compression avec la face transversale accessible (2a, 3a) de l'arbre central (2) et/ou du logement périphérique (3), et on introduit dans et on fait coopérer les au moins deux organes de prise (14) du dispositif (11) d'extraction avec des trous d'ancrage (12) du roulement (1),
▪ et on réalise un coulissement axial relatif des au moins deux organes de prise (14) et de la au moins une face d'appui transversale (21) du dispositif (11) d'extraction, dans le sens de l'extraction du roulement (1), de telle sorte à exercer sur le roulement (1) une traction propre à l'extraire de son arbre central (2) et/ou de son logement périphérique (3).

## Patentansprüche

1. Abziehbares Rollenlager (1), das von der mittleren Welle (2) und/oder der Umfangsaufnahme (3), mit der es fest verbunden werden kann, abgezogen werden kann und auf beiden Seiten durch zwei Querflächen (9a, 9b) begrenzt ist, von denen mindestens eine eine zugängliche Querfläche (9a) ist, umfassend einen Innenring (4), einen Außenring (5) und eine Rollenanordnung (6) in einem Raum zwischen den beiden Ringen (4, 5), die einen Käfig (7) und Rollen (8) aufweist, die durch zwei Querflächen (13a, 13b) begrenzt sind, von denen mindestens eine eine zugängliche Querfläche (13a) ist, die neben der zugänglichen Querfläche (9a) angeordnet ist, wobei das Rollenlager (1) mit mindestens zwei Verankerungslöchern (12) versehen ist, die in mindestens zwei Verankerungslochrollen (8a) ausgeführt sind, die zu den N Rollen (8) gehören, die voneinander beabstandet und insbesondere im Wesentlichen in regelmäßigen Abständen voneinander beabstandet sind, wobei die mindestens zwei Verankerungslöcher (12) mit einer Zugangsendöffnung (12a) in der zugänglichen Querfläche (13a) münden, sich mindestens in der Richtung der Achse (AA) des Rollenlagers (1) erstrecken und mindestens ein inneres Mittel (15a) zur mindestens zugmäßigen Verankerung in der Richtung einer selben zugänglichen Querfläche (9a) des Rollenlagers (1) haben, in der die mindestens zwei Verankerungslöcher (12) münden, die dazu geeignet und bestimmt sind, zwei Greifglieder (14) einer Vorrichtung (11) zum Abziehen des Rollenlagers relativ gleitend aufnehmen und so mit diesen zusammenwirken zu können, dass sie mindestens zugfest in Richtung der zugänglichen Querfläche (13a) fest verbunden sind.

2. Abziehbares Rollenlager (1) nach Anspruch 1, das mit n Verankerungslöchern (12)versehen ist, die in n Verankerungslochrollen (8a) ausgeführt sind, die mit einem im Wesentlichen gleichen Winkelabstand voneinander beabstandet sind, wobei n mindestens gleich zwei ist und zur optimalen Verteilung der Kräfte zum Abziehen des Rollenlagers (1) gewählt ist, wobei n insbesondere gleich drei ist, so dass die Verankerungslochrollen (8a) mit einem Winkelabstand von im Wesentlichen gleich 120° voneinander beabstandet sind.

3. Abziehbares Rollenlager (1) nach einem der Ansprüche 1 und 2, wobei die Rollenanordnung (6) eine oder mehrere Reihen von Rollen (8) umfasst und wobei die Rollenanordnung (6) eine Zylinderrollenanordnung oder eine Kegelrollenanordnung oder eine Kugelrollenanordnung ist.

4. Abziehbares Rollenlager (1) nach einem der Ansprüche 1 bis 3, wobei sich ein Verankerungsloch (12) im Wesentlichen parallel zu der Achse (BB) der Verankerungslochrolle (8a) erstreckt, in der es ausgeführt ist, und insbesondere ein Verankerungsloch (12) im Wesentlichen koaxial zu der Verankerungslochrolle (8a) ist, in der es ausgeführt ist.

5. Abziehbares Rollenlager (1) nach einem der Ansprüche 1 bis 4, wobei sich ein Verankerungsloch (12) in der allgemeinen Richtung der Achse (AA) des Rollenlagers (1), insbesondere parallel, im Wesentlichen parallel oder etwas geneigt zu der Achse (AA) erstreckt.

6. Abziehbares Rollenlager (1) nach einem der Ansprüche 1 bis 5, wobei das Verankerungsloch (12) ein Loch mit Innengewinde ist, wobei ein inneres Verankerungsmittel (15a) des Verankerungslochs (12) ein Innengewinde ist.

7. Abziehbares Rollenlager (1) nach einem der Ansprüche 1 bis 6, wobei ein Verankerungsloch (12) einen Durchmesser hat, der weniger als ungefähr ein Drittel des äußeren Durchmessers der Verankerungslochrolle (8a), in der das Verankerungsloch (12) ausgeführt ist, beträgt.

8. Abziehbares Rollenlager (1) nach einem der Ansprüche 1 bis 7, wobei das Verankerungsloch (12) ein Sackloch ist.

9. Abziehbares Rollenlager (1) nach Anspruch 8, wobei sich ein Sack-Verankerungsloch (12) über eine Länge erstreckt, die, in der Richtung des Verankerungslochs (12) gerechnet, ungefähr der Hälfte der Länge der Verankerungslochrolle (8a), in der das Verankerungsloch (12) ausgeführt ist, oder weniger entspricht.

10. Abziehbares Rollenlager (1) nach einem der Ansprüche 1 bis 7, wobei das Verankerungsloch (12) ein Loch ist, das durch die Verankerungslochrolle (8a) geht, in der es ausgeführt ist.

11. Abziehbares Rollenlager (1) nach Anspruch 10, wobei der Käfig (7) der Rollenanordnung (6) mit einer Aussparung versehen ist, die einem durchgehenden Verankerungsloch (12) gegenüberliegt.

12. Abziehbares Rollenlager (1) nach einem der Ansprüche 1 bis 11, wobei die Verankerungslöcher (12) an einer einzigen zugänglichen Querfläche (13a) des Rollenlagers (1) münden.

13. Abziehbares Rollenlager (1) nach einem der Ansprüche 1 bis 11, wobei die Verankerungslöcher (12) an jeder der beiden Querflächen (13a, 13b) des Rollenlagers (1) münden.

14. Abziehbares Rollenlager (1) nach einem der Ansprüche 1 bis 13, wobei die N Rollen (8) alle Verankerungslochrollen (8a) sind.

15. Abziehbares Rollenlager (1) nach einem der Ansprüche 1 bis 14, wobei der Bohrungsdurchmesser des Innenrings (4) mindestens gleich 150 mm ist und insbesondere das abziehbare Rollenlager (1) ein großes Rollenlager (1) ist, dessen Innenring-Bohrungsdurchmesser gleich oder größer als 180 mm ist.

16. Abziehbares Rollenlager (1) nach einem der Ansprüche 1 bis 15, **gekennzeichnet durch** Stopfkörper (16), die geeignet sind, in den Verankerungslöchern (12) aufgenommen zu werden und mit diesen zusammenzuwirken, so dass sie entfernbar mit den Verankerungslochrollen (8a) verbunden sind.

17. Abziehbares Rollenlager (1) nach Anspruch 16, wobei die Stopfkörper (16) in den Verankerungslöchern (12) aufgenommen sind und mit diesen zusammenwirken.

18. Abziehbares Rollenlager (1) nach einem der Ansprüche 1 bis 16, wobei die Verankerungslöcher (12) frei sind.

19. Abziehbares Rollenlager (1) nach einem der Ansprüche 1 bis 16, das geeignet ist, Greifglieder (14) einer Vorrichtung (11) zum Abziehen des Rollenlagers aufzunehmen, die in den Verankerungslöchern (12) aufgenommen sind und mit diesen zusammenwirken, so dass sie bei zusammenwirkenden Verankerungsmitteln (15a und 15b) mindestens zugfest in Richtung der zugänglichen Querfläche (9a) des Rollenlagers (1) verbunden sind.

20. Baugruppe eines abziehbaren Rollenlagers (1) nach einem der Ansprüche 1 bis 19 und seiner mittleren Welle (2) und/oder seiner Umfangsaufnahme (3), wobei der Innenring (4) starr auf der mittleren Welle (2) und der Außenring (5) starr in der Umfangsaufnahme (3) montiert ist, wobei die Querfläche (9a) des Rollenlagers (1), in der Verankerungslöcher (12) münden, von außerhalb der Baugruppe (1 + 2 + 3) zugänglich ist.

21. System, umfassend eine Baugruppe nach Anspruch 20 und eine Vorrichtung (11) zum Abziehen eines von der Baugruppe (1 + 2 + 3) abziehbaren Rollenlagers (1), die an das abziehbare Rollenlager (1), das abzuziehen ist, angepasst ist, eine Achse (CC) hat und Folgendes umfasst:
• mindestens zwei Greifglieder (14), die mindestens ein äußeres Verankerungsmittel (15b) haben, sich mindestens in der Richtung der Achse (CC) erstrecken und geeignet sind, wenn dies für das Abziehen des Rollenlagers (1) gewünscht ist, voneinander beabstandet angeordnet zu werden, und zwar insbesondere im Wesentlichen regelmäßig um die Achse (CC) beabstandet zu werden, und in den mindestens zwei Verankerungslöchern (12) des Rollenlagers (1) aufgenommen zu werden, wobei die äußeren Verankerungsmittel (15b) mit den inneren Verankerungsmitteln (15a) der Verankerungslöcher (12) der Verankerungslochrollen (8a) zusammenwirken, und zwar zur starren, mindestens zugmäßigen Zuordnung von Greifglied (14) zu Verankerungsloch (12) in Richtung der zugänglichen Querfläche (13a) des Rollenlagers (1), an der Verankerungslöcher (12) münden, wobei die Abziehvorrichtung (11) somit fest mit dem Rollenlager (1) verbunden ist,
• Mittel (17), die geeignet sind, auf die mindestens zwei Greifglieder (14) eine relative Abziehzugkraft bezüglich des Rollenlagers (1) in einer Richtung gemäß der Achse des Rollenlagers (1), oder mit einer Komponente gemäß der Achse des Rollenlagers (1), und in der von der zugänglichen Querfläche (13a) des Rollenlagers (1), an der Verankerungslöcher (12) münden, nach außerhalb des Rollenlagers (1) gehenden Richtung auszuüben.

22. System nach Anspruch 21, das mit drei Greifgliedern (14) versehen ist, die mit einem Winkelabstand von im Wesentlichen gleich 120° voneinander beabstandet sind.

23. System nach einem der Ansprüche 21 und 22, wobei Mittel (17), die geeignet sind, auf die mindestens zwei Greifglieder (14) eine relative Abziehzugkraft bezüglich des Rollenlagers (1) in einer Richtung gemäß der Achse des Rollenlagers (1), oder mit einer Komponente gemäß der Achse des Rollenlagers (1), und in der von der zugänglichen Querfläche (13a) des Rollenlagers (1), an der Verankerungslöcher (12) münden, nach außerhalb des Rollenlagers (1) gehenden Richtung auszuüben, Folgendes umfassen:
• einen Körper (19) sowie, fest mit dem Körper (19) verbunden,
• Verbindungsmittel (20) zwischen dem Körper (19) und den mindestens zwei Greifgliedern (14), die geeignet sind, eine Abziehzugkraft auf die mindestens zwei Greifglieder (14) auszuüben, und
• mindestens eine Querstützfläche (21), die geeignet ist, unter Druck mit einer zugänglichen Querfläche (2a, 3a) der mittleren Welle (2) und/oder der Umfangsaufnahme (3) der das abziehbare Rollenlager (1), die mittlere Welle (2) und/oder die Umfangsaufnahme (3) umfassenden Baugruppe (1 + 2 + 3) zusammenzuwirken,
• Mittel (22) zum axialen relativen Gleiten der mindestens zwei Greifglieder (14) und der mindestens einen Querstützfläche (21) in der Abziehrichtung des Rollenlagers (1).

24. System nach einem der Ansprüche 21 bis 23, wobei das Greifglied (14) eine Schraube oder eine Gewindestange ist, wobei das Verankerungsloch (12) ein Loch mit Innengewinde ist.

25. Abziehbereite Anordnung einer Vorrichtung (11) zum Abziehen eines abziehbaren Rollenlagers (1), die an einem montierten abziehbaren Rollenlager (1) montiert ist,
• die Folgendes umfasst, das im Wesentlichen koaxial angeordnet ist:
∘ eine Baugruppe (1 + 2 + 3) aus einem abziehbaren Rollenlager
(1) und seiner mittleren Welle (2) und/oder seiner Umfangsaufnahme (3) nach Anspruch 20, wobei die mittlere Welle
(2) und/oder die Umfangsaufnahme (3) eine zugängliche Querfläche (2a, 3a) umfassen, mit der eine Querstützfläche (21) der Vorrichtung (11) zum Abziehen eines abziehbaren Rollenlagers (1) unter Druck zusammenwirkt,
∘ eine Vorrichtung (11) zum Abziehen eines abziehbaren Rollenlagers (1), deren Greifglieder (14) in Verankerungslöchern (12) des Rollenlagers (1) aufgenommen sind und mit diesen zusammenwirken, die an der Seite der zugänglichen Querfläche (2a, 3a) der mittleren Welle (2) und/oder der Umfangsaufnahme (3) an der zugänglichen Querfläche (13a) des Rollenlagers (1) münden,
• so dass die Betätigung der Mittel (22) zum axialen relativen Gleiten in der Abziehrichtung des Rollenlagers (1) derart ist, die mindestens zwei Greifglieder (14) eine geeignete Zugkraft auf das Rollenlager (1) ausüben, dank derer es von seiner mittleren Welle (2) und/oder seiner Umfangsaufnahme (3) abgezogen wird.

26. Verfahren zum Abziehen eines Rollenlagers (1) von der mittleren Welle (2) und/oder der Umfangsaufnahme (3), mit der das Rollenlager (1) fest verbunden ist, wobei man
• über ein abziehbares Rollenlager (1) nach einem der Ansprüche 1 bis 19 verfügt, das mindestens zwei Verankerungslöcher (12) hat,
• über eine Vorrichtung (11) zum Abziehen eines abziehbaren Rollenlagers (1) nach einem der Ansprüche 21 bis 24 verfügt,
• die Abziehvorrichtung (11) so am Rollenlager (1) montiert, dass sie im Wesentlichen koaxial sind, wobei die mindestens eine Querstützfläche (21) der Abziehvorrichtung (11) unter Druck an der zugänglichen Querfläche (2a, 3a) der mittleren Welle (2) und/oder der Umfangsaufnahme (3) anliegt, und man die mindestens zwei Greifglieder (14) der Abziehvorrichtung (11) in die Verankerungslöcher (12) des Rollenlagers (1) einführt und veranlasst, dass sie mit diesen zusammenwirken,
• und ein axiales Gleiten der mindestens zwei Greifglieder (14) und der mindestens einen Querstützfläche (21) der Abziehvorrichtung (11) in der Abziehrichtung des Rollenlagers (1) ausführt, so dass eine geeignete Zugkraft auf das Rollenlager (1) ausgeübt wird, dank derer es von seiner mittleren Welle (2) und/oder seiner Umfangsaufnahme (3) abgezogen wird.

## Claims

1. Extractable roller bearing (1) designed to be extracted from the central shaft (2) and/or the peripheral housing (3) on which it can be fitted in a fixed arrangement, bounded on both sides by two transverse faces (9a, 9b), at least one of which is an accessible transverse face (9a), comprising an inner ring (4), an outer ring (5) and, in a gap between the two rings (4, 5), an arrangement of rollers (6) including a cage (7) and rollers (8) bounded by two transverse faces (13a, 13b), at least one of which is an accessible transverse face (13a) disposed to the side of the accessible transverse face (9a), said bearing (1) being provided with at least two anchoring holes (12) provided in at least two rollers with anchoring holes (8a) constituting part of the N rollers (8), spaced apart from one another, more particularly spaced in a substantially regular arrangement, the at least two anchoring holes (12) opening via a terminal access opening (12a) into the accessible transverse face (13a), extending at least in the direction of the axis (AA) of the bearing (1) and having at least one internal anchoring means (15a) at least when subjected to a traction force in the direction of a same accessible transverse face (9a) of the bearing (1) into which the at least two anchoring holes (12) open, capable of and designed for accommodating, by means of a relative sliding movement, and co-operating with two engaging elements (14) of a bearing extraction device (11) so as to obtain a joined arrangement at least when subjected to a traction force in the direction of the accessible transverse face (13a).

2. Extractable roller bearing (1) as claimed in claim 1, provided with n anchoring holes (12) disposed in n rollers with anchoring holes (8a) spaced apart from one another by a substantially equal angular spacing, n being at least equal to two and being selected with a view to optimising distribution of the forces for extracting the bearing (1), n being in particular equal to three, in which case the rollers with anchoring holes (8a) are spaced apart from one another by an angular spacing substantially equal to 120°.

3. Extractable roller bearing (1) as claimed in any one of claims 1 and 2, wherein the arrangement of rollers (6) comprises one or more rows of rollers (8) and wherein the arrangement of rollers (6) has cylindrical rollers or conical rollers or spherical rollers.

4. Extractable roller bearing (1) as claimed in any one of claims 1 to 3, wherein an anchoring hole (12) extends substantially parallel with the axis (BB) of the roller with an anchoring hole (8a) in which it is disposed, more particularly an anchoring hole (12) is substantially coaxial with the roller with an anchoring hole (8a) in which it is disposed.

5. Extractable roller bearing (1) as claimed in any one of claims 1 to 4, wherein an anchoring hole (12) extends in the general direction of the axis (AA) of the bearing (1), in particular parallel, substantially parallel or slightly inclined on the axis (AA).

6. Extractable roller bearing (1) as claimed in any one of claims 1 to 5, wherein an anchoring hole (12) is a tapped hole, an internal anchoring means (15a) of the anchoring hole (12) being a tapping.

7. Extractable roller bearing (1) as claimed in any one of claims 1 to 6, wherein an anchoring hole (12) has a diameter of less than one third of the external diameter of the roller with an anchoring hole (8a) in which the anchoring hole (12) is disposed.

8. Extractable roller bearing (1) as claimed in any one of claims 1 to 7, wherein an anchoring hole (12) is a blind hole.

9. Extractable roller bearing (1) as claimed in claim 8, wherein a blind anchoring hole (12) extends across a length in the order of or less than a half of the length of the roller with an anchoring hole (8a) in which the anchoring hole (12) is disposed, viewed in the direction of the anchoring hole.

10. Extractable roller bearing (1) as claimed in any one of claims 1 to 7, wherein an anchoring hole (12) is a hole traversing the roller with an anchoring hole (8a) in which it is disposed.

11. Extractable roller bearing (1) as claimed in claim 10, wherein the cage (7) of the arrangement of rollers (6) is provided with a recess disposed facing a traversing anchoring hole (12).

12. Extractable roller bearing (1) as claimed in any one of claims 1 to 11, wherein the anchoring holes (12) open onto a single accessible transverse face (13a) of the bearing (1).

13. Extractable roller bearing (1) as claimed in any one of claims 1 to 11, wherein anchoring holes (12) open onto each of the two transverse faces (13a, 13b) of the bearing (1).

14. Extractable roller bearing (1) as claimed in any one on claims 1 to 13, wherein the N rollers (8) are all rollers with anchoring holes (8a).

15. Extractable roller bearing (1) as claimed in any one of claims 1 to 14, wherein the bore diameter of the inner ring (4) is at least equal to 150 mm, in particular the extractable roller bearing (1) is a large bearing (1), the bore diameter of the inner ring being equal to or greater than 180 mm.

16. Extractable roller bearing (1) as claimed in any one of claims 1 to 15, **characterised by** blanking bodies (16) designed to be accommodated in and co-operate with the anchoring holes (12) so as to be joined in a removable manner to the rollers with anchoring holes (8a).

17. Extractable roller bearing (1) as claimed in claim 16, wherein the blanking bodies (16) are accommodated in and co-operate with the anchoring holes (12).

18. Extractable roller bearing (1) as claimed in any one of claims 1 to 16, wherein the anchoring holes (12) are free.

19. Extractable roller bearing (1) as claimed in any one of claims 1 to 16, designed to receive engaging elements (14) of a bearing extraction device (11) accommodated in and co-operating with the anchoring holes (12) so that the anchoring means (15a and 15b) co-operate to obtain a joined arrangement at least when subjected to a traction force in the direction of the accessible transverse face (9a) of the bearing (1).

20. Assembly of an extractable roller bearing (1) as claimed in any one of claims 1 to 19 and its central shaft (2) and/or its peripheral housing (3), the inner ring (4) being rigidly mounted on the central shaft (2) and the outer ring (5) being rigidly mounted in the peripheral housing (3), the transverse face (9a) of the bearing (1) into which anchoring holes (12) open being accessible from outside the assembly (1 + 2 + 3).

21. System comprising an assembly as claimed in claim 20 and a device (11) for extracting an extractable roller bearing (1) from the assembly (1 + 2 + 3) designed for the extractable roller bearing (1) to be extracted, having an axis (CC) and comprising:
- at least two engaging elements (14) having at least one external anchoring means (15b) extending at least in the direction of the axis (CC) designed - when desired with a view to extracting the bearing (1)
- to be disposed spaced apart from one another, more particularly in a substantially regularly spaced arrangement about the axis (CC), and to be accommodated in the at least two anchoring holes (12) of the bearing (1), the external anchoring means (15b) co-operating with the internal anchoring means (15a) of the anchoring holes (12) of rollers with anchoring holes (8a) to obtain a rigid arrangement of the engaging element (14) / anchoring hole (12) at least when subjected to a traction force in the direction of the accessible transverse face (13a) of the bearing (1) into which anchoring holes (12) open, the extraction device (11) thus being joined to the bearing (1),
- means (17) designed to apply to the at least two engaging elements (14) an extracting traction force relative to the bearing (1) in a direction along the axis of the bearing (1) - or containing a component along the axis of the bearing (1) - and in the direction towards the outside of the bearing (1) from said accessible transverse face (13a) of the bearing (1) into which anchoring holes (12) open.

22. System as claimed in claim 21, provided with three engaging elements (14) spaced apart from one another by an angular spacing substantially equal to 120°.

23. System as claimed in any one of claims 21 and 22, wherein means (17), capable of applying a relative extracting traction force to the at least two engaging elements (14) with respect to the bearing (1) in a direction along the axis of the bearing (1) - or containing a component along the axis of the bearing (1) - and in the direction towards the outside of the bearing (1) from said accessible transverse face (13a) of the bearing (1) into which anchoring holes (12) open, comprise:
- a body (19) and, joined to the body (19),
- connecting means (20) between the body (19) and the at least two engaging elements (14), capable of exerting an extracting traction force on the at least two engaging elements (14), and
- at least one transverse supporting face (21) designed to co-operate under the effect of a compression force on an accessible transverse face (2a, 3a) of the central shaft (2) and/or the peripheral housing (3) of the assembly (1 + 2 + 3) comprising the extractable roller bearing (1), central shaft (2) and/or peripheral housing (3),
- means (22) to effect a relative axial sliding movement of the at least two engaging elements (14) and the at least one transverse supporting face (21) in the extraction direction of the bearing (1).

24. System as claimed in any one of claims 21 to 23, wherein the engaging element (14) is a screw or threaded rod, the anchoring hole (12) being a tapped hole.

25. Unit, ready for extraction, mounted with a device (11) for extracting an extractable roller bearing (1) on a fitted extractable roller bearing (1),
- comprising, disposed in a substantially coaxial arrangement:
° an assembly (1 + 2 + 3) of an extractable roller bearing (1) and its central shaft (2) and/or its peripheral housing (3) as claimed in claim 20, the central shaft (2) and/or peripheral housing (3) having an accessible transverse face (2a, 3a) on which, under the effect of a compression force, a transverse supporting face (21) of the device (11) for extracting an extractable roller bearing (1) co-operates,
° a device (11) for extracting an extractable roller bearing (1), the engaging elements (14) of which are accommodated in and co-operate with anchoring holes (12) of the bearing (1) opening onto the accessible transverse face (13a) of the bearing (1) to the side of the accessible transverse face (2a, 3a) of the central shaft (2) and/or peripheral housing (3),
- so that activation of the means (22) for effecting a relative axial sliding movement in the extraction direction of the bearing (1) is such that the at least two engaging elements (14) exert on the bearing (1) a traction force sufficient to extract it from its central shaft (2) and/or its peripheral housing (3).

26. Method of extracting a roller bearing (1) from the central shaft (2) and/or peripheral housing (3) to which the bearing (1) is fixedly connected, wherein:
- an extractable roller bearing (1) is provided as claimed in any one of claims1 to 19, having at least two anchoring holes (12),
- a device (11) for extracting an extractable roller bearing (1) is provided as claimed in any one of claims 21 to 24,
- the extraction device (11) is fitted on the bearing (1) so that the latter are substantially coaxial, the at least one transverse supporting face (21) of the extraction device (11) being supported under compression by the accessible transverse face (2a, 3a) of the central shaft (2) or peripheral housing (3), and the at least two engaging elements (14) of the extraction device (11) are introduced into and made to co-operate with the anchoring holes (12) of the bearing (1),
- and a relative axial sliding movement of the at least two engaging elements (14) and the at least one transverse supporting face (21) of the extraction device (11) is effected in the extraction direction of the bearing (1) so as to exert on the bearing (1) a traction force sufficient to extract it from its central shaft (2) and/or its peripheral housing (3).
